**Europäisches Patentamt**

**European Patent Office**

**Office européen des brevets**

(19)

(11) Publication number: **0 182 649**
**B1**

(12) **EUROPEAN PATENT SPECIFICATION**

(45) Date of publication of patent specification: **07.02.90**

(51) Int. Cl.⁵: **C 01 B 31/20**

(21) Application number: **85308413.5**

(22) Date of filing: **19.11.85**

(88) A request for correction has been filed on 310186 pursuant to Rule 88 EPC. A decision on the request will be taken during the proceedings before the Examining Division.

(54) Process for purifying carbon dioxide.

(30) Priority: **22.11.84 JP 245891/84**
**21.12.84 JP 268547/84**

(43) Date of publication of application:
**28.05.86 Bulletin 86/22**

(45) Publication of the grant of the patent:
**07.02.90 Bulletin 90/06**

(84) Designated Contracting States:
**BE DE FR GB IT NL**

(56) References cited:
**US-A-3 317 278**

**CHEMICAL ABSTRACTS, vol. 62, no. 6, 15 March 1965, Columbus, OH (US); L.SZEPESY: "Removing contaminants from natural carbon dioxidegas", col. 6314-f**

**CHEMICAL ABSTRACTS, vol. 68, no. 10, 04 March 1968, Columbus, OH (US); p. 4069, no. 41710d**

(73) Proprietor: **MITSUI TOATSU CHEMICALS, Inc.**
**2-5 Kasumigaseki 3-chome**
**Chiyoda-Ku Tokyo 100 (JP)**

(72) Inventor: **Kawabe, Toyotaro**
**Kamotanidai 1-34-1**
**Sakai-shi Osaka-fu (JP)**
Inventor: **Sonoda, Mitoshi**
**Toriishi 3-14-1-111**
**Takaishi-shi Osaka-fu (JP)**
Inventor: **Onse, Norio**
**Onosato 1313-26**
**Sennan-shi Osaka-fu (JP)**

(74) Representative: **Hayward, Denis Edward Peter et al**
**Lloyd Wise, Tregear & Co. Norman House 105-109 Strand**
**London WC2R 0AE (GB)**

(56) References cited:
**CHEMICAL ABSTRACTS, vol. 74, no. 22, 31 May 1971, Columbus, OH (US); M.A.FILATOVA et al.: "Removal of combustible impurities from carbon dioxide", p. 103, no. 113869m**

(56) References cited:
CHEMICAL ABSTRACTS, vol. 75, no. 22, 29 Nov 1971, Columbus, OH (US); p. 78, no. 131253f

CHEMICAL ABSTRACTS, vol. 85, no. 6, 9 Aug 1976, Columbus, OH (US); p. 130, no. 35166r

CHEMICAL ABSTRACTS, vol. 98, no. 22, 30 May 1983, Columbus, OH (US); p. 139, no. 181991r

CHEMICAL ABSTRACTS, vol. 62, no. 6, 15 March 1965, Columbus, OH (US); L.SZEPESY: "Removing contaminants from natural carbon dioxide gas", Col. 6314-F

CHEMICAL ABSTRACTS, vol. 68, no. 10, 04 March 1968, Columbus, OH (US); p. 4069, no. 41710d

CHEMICAL ABSTRACTS, vol. 62, no. 6, 15 March 1965, Columbus, OH (US); L.SZEPESY: "Removing contaminants from natural carbon dioxidegas", col. 6314-f

CHEMICAL ABSTRACTS, vol. 68, no. 10, 04 March 1968, Columbus, OH (US); p. 4069, no. 41710d

## Description

The present invention relates to a process for purifying carbon dioxide. Carbon dioxide is widely used in the form of liquefied carbonic acid gas or dry ice for preserving fish, butter, cheese, ice cream and the like, for low temperature transportation, cooling, welding, in foundries, in the manufacture of soft drinks, in fire extinguishers, etc.

Natural gas, fermentation gas, by-product gas from oil refineries, by-product gas from ammonia synthesizing processes, etc. are industrially employed as crude carbon dioxide raw materials in the production of liquefied carbonic acid gas and dry ice. Processes for preparing carbon dioxide of high purity are already established technically (see e.g. US-A-3,317,278). Crude carbon dioxide which is a by-product of ammonia production contains methane and hydrogen as major impurities, and can be easily purified by distillation methods or the like, because these impurities remain in the gaseous state under the liquefying conditions of carbon dioxide.

On the other hand, when crude carbon dioxide obtained as a by-product of ethylene oxide manufacture is employed as a carbon dioxide source, methane, ethylene, acetaldehyde and the like are contained as the impurities. Ethylene, acetaldehyde and the like are converted to liquid under the liquefying conditions of carbon dioxide, and thus they exist as impurities in the liquefied carbon dioxide, with an accompanying strange odor. Such carbon dioxide cannot be used for the preservation and transportation of foods or as an additive for soft drinks, not only because of the strange odor but also because of harmful influence upon the human body.

In the case of dry ice, ethylene exists as a residual impurity and vaporizes under the dry ice manufacturing conditions (normal pressure, -78°C), which can cause explosive destruction of compression molded dry ice products or breakage in handling of the products due to a severe reduction in strength.

Methane, ethylene, acetaldehyde and the like are, as well known, oxidized in the presence of catalysts. Metals of the eighth group in the periodic table, metallic platinum and metallic palladium in particular, are generally known to have a strong activity, among catalysts having a high oxidation capability, as excellent oxidizing catalysts retaining their performance for a long period. Reaction temperatures, however, differ greatly according to the substances to be oxidized. When two or more impurities such as methane, ethylene, acetaldehyde are removed by oxidation in particular, there is a difficulty in carefully selecting and maintaining reaction temperatures. Thus, when purifying crude carbon dioxide containing methane and other impurities, the present invention seeks to solve the problems involved in converting the impurities other than methane by an oxidizing reaction and separating the methane by other means. In this case, there has been the difficulty of inhibiting the methane oxidizing reaction as much as possible while completely carrying out other oxidizing reactions, as well as the problem of needing to select high-priced materials for reactors to avoid the danger of accidents due to the frequent occurrence of violent reactions.

It is an object of the present invention to achieve a process for purifying crude carbon dioxide which contains methane and other organic impurities, such as the by-product of ethylene oxide manufacture, to carbon dioxide having a good quality suitable for use in liquefied carbon dioxide and dry ice.

According to the invention there is provided a process for purifying crude carbon dioxide containing methane and other organic impurities, in which the carbon dioxide gas stream is catalytically reacted with oxygen or oxygen-containing gas in the presence of an oxidizing catalyst or catalysts, and in which the incoming feed stream of carbon dioxide gas to the catalytic reactor is preheated by heat exchange with the product stream leaving the catalytic reactor, characterised in that:

(1) the preheated feed gas stream is supplied to the catalytic reactor still containing the methane impurity;

(2) the quality of oxygen or oxygen-containing gas supplied to the catalytic reaction zone is that required for complete combustion of all the impurities in the carbon dioxide feed stream except the methane;

(3) the temperature of the feed gas at entry to the catalytic reaction zone is regulated to a level predetermined to be adequate to initiate the oxidizing reaction in respect of the impurities contained in the gas, except methane, while being too low to cause an oxidation reaction of the methane;

(4) the temperature across the reaction zone is allowed to rise due to the exothermic nature of the oxidation in a controlled fashion such that the final temperature is high enough to effect substantially complete oxidation to carbon dioxide of the impurities other than methane but not high enough to oxidize methane, the methane impurity thereby remaining unchanged;

(5) the methane is thereafter removed from the product stream exiting the catalytic reaction system by other means;

the control of the temperatures in the catalytic reaction zone being effected by regulation of the preheat and flow quantity of the crude carbon dioxide feed stream.

Preferably, the catalytic reaction is performed in two stages, firstly with a catalyst system containing manganese dioxide and copper oxide, and secondly with a catalyst system comprising a metal or metals of the eighth group in the periodic table.

In the preferred process according to this invention, crude carbon dioxide containing methane and other organic impurities is firstly reacted catalytically with oxygen or oxygen-containing gas in the presence of oxidizing catalysts, and the impurities except methane are oxidized to carbon dioxide. In this reaction:

(1) The inlet temperature range of the catalyst layer is maintained such that oxidation of the impurities except methane is initiated, being controlled by the temperature of the preheated crude carbon dioxide feed.

(2) The reaction temperature increases toward the outlet of the catalyst layer as a result of the exothermic oxidizing reaction. In order to keep the reaction within the temperature range wherein the organic impurities except methane are completely oxidized but the methane remains substantially stable, said temperature range is controlled by the inlet temperature of the catalyst layer, and consequently by the temperature of the crude carbon dioxide feed, and is further, if necessary, controlled by adjusting the flow quantity of the crude carbon dioxide fed into the reaction system.

(3) The determination of reaction temperatures whereat the organic impurities except methane oxidize and methane remains stable is made beforehand according to the information available regarding the nature and quantities of the methane and other impurities in the crude carbon dioxide and the types of catalyst to be employed.

(4) The waste heat generated by the oxidizing reaction is transferred to a portion of the crude carbon dioxide which is used for the temperature control of the crude carbon dioxide feed supplied to the reaction system.

(5) The quantity of oxygen or oxygen-containing gas supplied to the reaction system is sufficient to completely combust the organic impurities except methane, the amount being calculated from the flow rate of the crude carbon dioxide feed and the information based on analysis of its constituents.

The crude carbon dioxide which includes methane and other organic impurities that is used as feed in the process of this invention may contain not only saturated and unsaturated hydrocarbons such as methane, ethylene, butane and the like, but also aldehydes such as acetaldehyde and fatty acids such as acetic acid which are low grade oxidation products of hydrocarbons.

As the oxidizing catalysts in the process of the present invention there may be used one or more than one component from amongst the oxides in the fourth period of the periodic table, which include titanium, vanadium, chromium, manganese, iron, cobalt, nickel and copper, or one or more than one component from amongst the so-called platinum group metals in the eighth group of the fifth and sixth periods of the periodic table, or catalysts consisting of these components supported on carriers such as alumina and the like.

More preferably, by using the following compounds as the oxidation catalysts, the oxidation reaction is carried out in two catalytic reaction stages.

The first is a reaction stage using catalysts which contain manganese dioxide and copper oxide. A reduction of the combustion temperature is achieved in this stage.

The second is a reaction stage using a catalyst from amongst the metals of the eighth group in the periodic table. As the metals of the eighth group in the periodic table, palladium and platinum are suitably selected and the platinum catalyst is preferable in particular. A variety of carriers can be used and γ-alumina is preferable in particular. The two reaction stages may be performed in separate reactors, but are preferably performed in one reactor containing two layers of the catalysts.

In the process of this invention, the organic impurities except methane are thus removed by oxidizing to carbon dioxide during the catalytic oxidation reaction. The resulting crude carbon dioxide may be further processed with normal methods such as distillation, liquefication and the like to separate the methane and give carbon dioxide having a very high purity.

The process of the present invention makes possible the production of carbon dioxide of extra high purity and substantially no ethylene or acetaldehyde at all, from crude carbon dioxide containing impurities which include, for example, hydrocarbons such as ethylene and their oxidation products such as acetaldehyde. Therefore, the carbon dioxide thus obtained can safely be used for the preservation and transportation of foods or as an additive to soft drinks, etc. Dry ice having a very excellent quality without weakness leading to destruction can also be prepared from the carbon dioxide thus obtained.

In addition, when the aforesaid two stages, that is, (1) the reaction stage using catalysts which contain manganese dioxide and copper oxide, and (2) the reaction stage using a catalyst from amongst the metals of the eighth group in the periodic table, are employed in the catalytic reaction process, the organic impurities except methane can be completely oxidized even at low reaction temperatures, while preventing the oxidation reaction of the methane contained in the crude carbon dioxide. Therefore, the violent reaction that occurs upon the oxidation of methane can be inhibited, the control of the reaction conditions becomes easy, safety is secured, the selection of special plant materials in consideration of abnormally violent reaction conditions becomes unnecessary, and the purification of the carbon dioxide can advantageously be performed commercially with economy.

The present invention will be further illustrated in detail by way of the following Examples, and with reference to the accompanying drawings, in which:-

Fig. 1 illustrates a flow sheet of an example of a purifying process according to the present invention.

Fig. 2 illustrates the relationship between the reaction temperature and the percentage of removal of ethylene, acetaldehyde and methane.

Fig. 3 illustrates the relationship between the outlet temperature of the catalyst layer and the percentage of removal which is an example of the effect of this invention.

Fig. 4 illustrates the relationship between the outlet temperature of the catalyst layer and the percentage of removal, when a platinum catalyst supported on γ-alumina is used alone.

Example 1

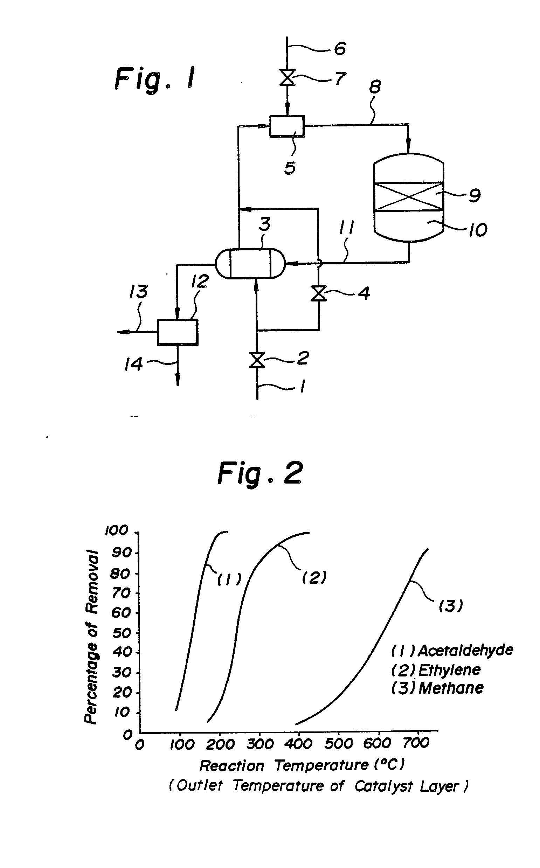

An example of the purification process of the present invention is illustrated in Figure 1 with a flow sheet.

Crude carbon dioxide 1, a by-product of ethylene oxide manufacture, containing 3,500 ppm of methane, 6000 ppm of ethylene, and 500 ppm of acetaldehyde, is fed to the reaction system through the valve 2 at a flow rate of 25 Nm³/min. A portion of the crude carbon dioxide is preheated by the waste heat of reacted gas in the heat exchanger 3, the other portion being bypassed through the valve 4 and re-mixed with the preheated portion beyond the heat exchanger 3. The whole is then transferred to an oxygen mixer 5, at a temperature that is thermally controlled to achieve the required temperature at the reaction stage, as will hereinafter be explained.

The quantity of oxygen for completely combusting the ethylene and acetaldehyde is calculated according to the flow quantity of crude carbon dioxide and the analysis of the feed. Oxygen 6 is fed to the oxygen mixer 5 through the valve 7 at a flow rate of 0.5 Nm³/min and mixed with the crude carbon dioxide.

The hot gas mixture 8 of crude carbon dioxide and oxygen is fed to the reactor 10 containing platinum catalyst XC-140-2-062 (Trade name of CCI Far East) 9 which is supported by γ-alumina, and the inlet temperature of the catalyst layer is maintained at 200°C by the heat of the incoming gas mixture.

The temperature of 200°C was previously determined having regard to the composition of the crude carbon dioxide and the kind of catalyst used. In this case by using the gas mixture of crude carbon dioxide and oxygen having the composition as described above, and in the presence of 50 ml of the same catalyst, a test was performed in which the crude carbon dioxide at a flow rate of 820 l/hr was reacted with oxygen at a flow rate of 30 l/hr. The results as illustrated in Fig. 2 were obtained for the relationship between reaction temperature and the percentage of removal of ethylene, acetaldehyde and methane. It was found from these results that the decomposition of ethylene commenced at 160°C and acetaldehyde started to decompose at lower temperatures. Therefore the temperature of 200°C was chosen as the initiation temperature of the reaction, namely, the inlet temperature of the catalyst layer.

When the reaction is commenced at the temperature of 200°C, measured at the inlet of the catalyst layer, the reaction temperature rises up to 400°C because of the exothermic oxidizing reaction. As clearly shown in Fig. 2, the acetaldehyde 1 and the ethylene 2 in the crude carbon dioxide are completely oxidized at this temperature, and the methane is substantially stable. Therefore, the reaction temperature is thereafter controlled at 400°C.

The reaction temperature is controlled, to maintain the temperature of the catalyst layer within the aforesaid temperature range wherein ethylene is completely oxidized, by temperature regulation at the valve 4 carried out by varying the flow quantity ratio of crude carbon dioxide which passes through the heat-exchanger 3 and the bypass. Further control is performed, when needed, by adjusting the flow quantity of crude carbon dioxide 1 which is fed to the reaction system through the valve 2.

The resulting carbon dioxide 11 is transferred to a methane separator 12, after exchanging heat with the aforesaid preheated portion of the incoming crude carbon dioxide in the heat-exchanger 3.

The methane content of the resulting carbon dioxide is 3,380 ppm, and ethylene and acetaldehyde are not detected.

Methane 13 is separated from the resulting carbon dioxide by a normal procedure, for example, liquefaction to obtain purified carbon dioxide having a purity of 99.97%.

Example 2

The catalysts were packed in two layers in a vertical reactor. 20 L of a mixed catalyst MTC-101 (Trade name of CCI Far East) composed of manganese dioxide and copper oxide were packed in the first layer. 180 L of a platinum catalyst DASH-220 (Trade name of Engelhardt) which was carried on γ-alumina was packed in the second layer. Fed to the reactor was a gas mixture composed of 25 Nm³/min of crude carbon dioxide containing 2,300 ppm of methane, 5,600 ppm of ethylene and 350 ppm of acetaldehyde, and 0.5 Nm³/min of oxygen. The temperature at the reactor inlet was about 150°C. The temperature of gas at the reactor outlet was about 290°C. The gas at the reactor outlet contained 2,260 ppm of methane. Ethylene and acetaldehyde were not detected. The resulting gas was liquefied by the normal method and methane was separated to obtain pure carbon dioxide having a purity of 99.97%.

Comparative Example

The process of Example 2 was repeated except using 200 l of platinum catalyst DASH-220 alone, which was carried on γ-alumina.

The outlet temperature of the reactor was about 340°C which was about 50°C higher than Example 2. The methane content of the resulting gas was 2,100 ppm which was lower than Example 2. Ethylene and acetaldehyde were not detected. The purity of carbon dioxide obtained was 99.97%.

## Reference Example

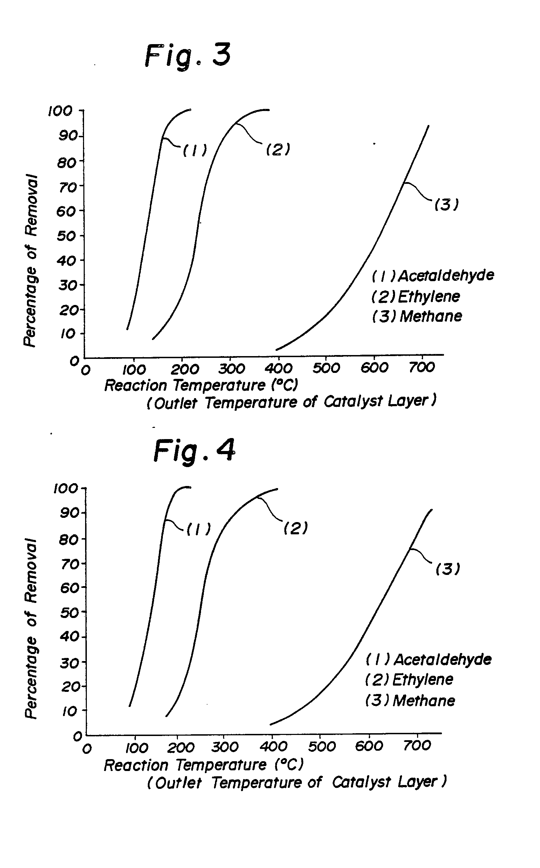

In order to analyse the reaction more clearly, the relation between the outlet temperature of the catalyst layer and the percentage of removal of methane, ethylene, and acetaldehyde were examined. The results are shown in Fig. 3 and Fig. 4. Fig. 3 illustrates the percentage of removal of acetaldehyde 1, ethylene 2, and methane 3, when the catalyst mixture of manganese dioxide and copper oxide was used in the first layer and the platinum catalyst supported on γ-alumina was used in the second layer. Fig. 4 shows the percentage of removal of acetaldehyde 1, ethylene 2, and methane 3, when the platinum catalyst supported on γ-alumina was used alone.

The catalysts used in Fig. 3 were 5 ml of MTC-101 and 45 ml of DASH-220 as in Example 2. The catalyst used in Fig. 4 was 50 ml of DASH-220. The feed gas was in all cases a mixture of 826 l/hr of crude carbon dioxide containing 2,930 ppm of methane, 6,270 ppm of ethylene, and 341 ppm of acetaldehyde, and 36.5 l/hr of oxygen.

Figures 3 and 4 show that, in the process of this invention, the same percentage of removal of hydrocarbons except methane can be obtained at about 50°C lower temperatures with the mixed catalysts as compared with γ-alumina supported platinum catalyst alone.

## Claims

1. A process for purifying crude carbon dioxide containing methane and other organic impurities, in which the carbon dioxide gas stream is catalytically reacted with oxygen or oxygen-containing gas in the presence of an oxidizing catalyst or catalysts, and in which the incoming feed stream of carbon dioxide gas to the catalytic reactor is preheated by heat exchange with the product stream leaving the catalytic reactor, characterised in that

(1) the preheated feed gas stream is supplied to the catalytic reactor still containing the methane impurity;

(2) the quality of oxygen or oxygen-containing gas supplied to the catalytic reaction zone is that required for complete combustion of all the impurities in the carbon dioxide feed stream except the methane;

(3) the temperature of the feed gas at entry to the catalytic reaction zone is regulated to a level predetermined to be adequate to initiate the oxidizing reaction in respect of the impurities contained in the gas, except methane, while being too low to cause an oxidation reaction of the methane;

(4) the temperature across the reaction zone is allowed to rise due to the exothermic nature of the oxidation in a controlled fashion such that the final temperature is high enough to effect substantially complete oxidation to carbon dioxide of the impurities other than methane but not high enough to oxidize methane, the methane impurity thereby remaining unchanged;

(5) the methane is thereafter removed from the product stream exiting the catalytic reaction system by other means;

the control of the temperatures in the catalytic reaction zone being effected by regulation of the preheat and flow quantity of the crude carbon dioxide feed stream.

2. A process according to claim 1, in which a portion of the crude carbon dioxide feed stream is preheated by heat exchange with the product stream from the catalytic reaction system and is thereafter remixed with another portion of the feed stream which bypasses said heat exchange step, temperature control being effected by regulation of the relative flow quantities passing through the heat exchange step and the bypass.

3. A process according to claim 2, wherein the methane in the product stream is removed after the product stream has passed through said heat exchange step with a portion of the incoming feed stream, e.g. by liquefaction of the carbon dioxide.

4. A process according to any preceding claim, wherein said catalytic reaction is performed in two stages, firstly with a catalyst system containing manganese dioxide and copper oxide, and secondly with a catalyst system comprising a metal or metals of the eighth group in the periodic table.

## Patentansprüche

1. Verfahren zur Reinigung von unreinem Kohlendioxid, das Methan und andere organische Verunreinigungen enthält, wobei der Kohlendioxidgasstrom katalytisch mit Sauerstoff oder einem sauerstoffhaltigen Gas in Gegenwart eines oxidierenden Katalysators oder von Katalysatoren zur Reaktion gebracht wird, und wobei der in den Katalysereaktor eintretende Beschickungsstrom aus Kohlendioxidgas durch Wärmeaustausch und dem Produktstrom, der den Katalysereaktor verläßt, vorerhizt wird, dadurch gekennzeichnet, daß

(1) der Beschickungsgastrom, der dem Katalysereaktor zugeführt wird noch die Methan-Verunreinigungen enthält;

(2) die Menge an Sauerstoff oder sauerstoffhaltigem Gas, das der katalytischen Reaktionszone zugeführt wird so groß ist, wie sie für die vollständige Verbrennung aller Verunreinigungen in dem Kohlendioxid-Beschickungsstrom außer Methan notwendig ist,

(3) die Temperatur des Beschickungsgases am Eingang der katalytischen Reaktionszone auf einen vorbestimmten Wert eingestellt wird, der geeignet ist, die Oxidationsreaktion in Bezug auf die im Gas enthaltenen Verunreinigungen auszulösen mit Ausnahme von Methan, während sie zu niedrig ist, um die Oxidationsreaktion des Methans zu bewirken,

(4) daß die Temperatur über die Reaktionszone infolge der exothermen Natur der Oxidation kontrolliert ansteigen kann, so daß die Endtemperatur hoch genug ist, um die im wesentlichen vollständige Oxidation der Verunreinigungen des Kohlendioxid, außer von Methan, zu erreichen, aber nicht hoch genug ist, um Methan zu oxidieren, so daß die Methanverunreinigungen dabei unverändert bleiben,

(5) daß das Methan anschließend aus dem Produktstrom, der das katalytische Reaktionssystem verläßt, durch andere Mittel entfernt wird, wobei die Steuerung der Temperatur in der katalytischen Reaktionszone durch die Regelung der Vorerhitzung und der Flußmenge des unreinen Kohlendioxidstromes bewirkt wird.

2. Verfahren nach Anspruch 1, wobei ein Teil des unreinen Kohlendioxid-Beschickungsstromes durch Wärmetausch mit dem Produktstrom aus dem katalytischen Reaktionssystem vorerhitzt wird und danach mit dem anderen Teil des Beschickungsstromes, der diesen Tauscher im Bypass umläuft, wieder gemischt wird, und daß die Temperatursteuerung durch Regulierung der relativen Flußmenge, die durch den Wärmetauscher und den Bypass tritt, bewirkt wird.

3. Verfahren nach Anspruch 2, wobei das Methan im Produktstrom entfernt wird, nachdem der Produktstrom den Wärmetauscher mit einem Teil des Beschickungsstromes passiert hat, z.B. durch Verflüssigung des Kohlendioxides.

4. Verfahren nach einem der vorstehenden Ansprüche, wobei die katalytische Reaktion in zwei Stufen durchgeführt wird, und zwar zunächst mit einem katalytischen System, das Mangandioxid und Kupferoxid enthält und dann mit einem katalytischen System, das ein Metall oder Metalle der achten Gruppe des Periodischen Systems enthält.

**Revendications**

1. Procédé de purification de dioxyde de carbone brut contenant du méthane et autres impuretés organiques, dans lequel on fait réagir catalytiquement le courant de gaz carbonique avec de l'oxygène ou un gaz contenant de l'oxygène, en présence d'un ou plusieurs catalyseurs, et dans lequel le courant d'alimentation de gaz carbonique arrivant dans le réacteur catalytique est préchauffé par échange de chaleur avec le courant de produit quittant le réacteur catalytique, caractérisé par le fait que :

(1) Le courant de gaz d'alimentation préchauffé qui contient encore l'impureté de méthane est amené au réacteur catalytique;

(2) La qualité de l'oxygène ou du gaz contenant l'oxygène amené à la zone de réaction catalytique est celle requise pour une combustion complète de toutes les impuretés contenues dans le courant d'alimentation de dioxyde de carbone excepté le méthane;

(3) Le température du gaz d'alimentation à l'entrée dans la zone de réaction catalytique est réglée à un niveau prédéterminé pour favoriser le démarrage de la réaction d'oxydation relative aux impuretés contenues dans le gaz, excepté méthane, tout en étant trop faible pour provoquer l'oxydation du méthane;

(4) La température à travers la zone de réaction peut s'élever, en raison de la nature exothermique de l'oxydation, d'une manière controlée, de façon que la température finale soit suffisamment élevée pour effecteur une oxydation relativement complète en dioxyde de carbone des impuretés autres que le méthane, l'impureté au méthane demeurant inchangée ce faisant;

(5) Le méthane est ensuite retiré du courant de produit sortant du système de réaction catalytique par d'autres moyens;
le contrôle des températures dans la zone de réaction catalytique étant effectué par régulation du préchauffage et de la quantité de flux du courant d'alimentation en dioxyde de carbone.

2. Procédé selon la revendication 1, dans lequel une partie du courant d'alimentation en dioxyde de carbone brut est préchauffé par échange de chaleur avec le courant de produit provenant du système de réaction catalytique et est ensuite remélangé à une autre partie du courant d'alimentation qui évite ladite étape d'échange de chaleur, un contrôle de la température étant effectué en régulant les quantités de flux relatif passant l'étape d'échange de chaleur et la dérivation.

3. Procédé selon la revendication 2, dans lequel le méthane contenu dans le courant de produit est éliminé après que le courant de produit est passé par ladite étape d'échange de chaleur avec une partie du courant d'alimentation affluant, par exemple par liquéfaction du dioxyde de carbone.

4. Procédé selon l'une quelconque des revendications précédentes, dans lequel ladite réaction catalytique est effectuée sur deux étages, premièrement avec un système catalyseur contenant du dioxyde de manganèse et de l'oxyde de cuivre et deuxièmement avec un système catalyseur comportant un ou plusieurs métaux du huitième groupe de la table de classification périodique.

*Fig. 1*

*Fig. 2*

Percentage of Removal

(1)

(2)

(3)

(1) Acetaldehyde
(2) Ethylene
(3) Methane

Reaction Temperature (°C)
(Outlet Temperature of Catalyst Layer)

1

## Fig. 3

Percentage of Removal vs. Reaction Temperature (°C) (Outlet Temperature of Catalyst Layer)

(1) Acetaldehyde
(2) Ethylene
(3) Methane

## Fig. 4

Percentage of Removal vs. Reaction Temperature (°C) (Outlet Temperature of Catalyst Layer)

(1) Acetaldehyde
(2) Ethylene
(3) Methane